# EUROPEAN PATENT APPLICATION

(11) **EP 2 656 710 A1**
(43) Date of publication of application: **30.10.2013**
(21) Application number: 13158264.5
(22) Date of filing: 07.03.2013
(51) Int. Cl.: A01B 59/06

(54) **Linkage mechanism on an agricultural vehicle**

(30) Priority: 26.04.2012 GB 201207366
(71) Applicant: AGCO International GmbH, 8212 Neuhausen am Rheinfall (CH)
(72) Inventor: Kaemmerer, Andreas, 97268 Gaubuettelbrunn (DE)
(74) Representative: AGCO Intellectual Property Department

(57) **Abstract**

An assembly of a mounting component (1) for operating a linkage on an agricultural vehicle and a reservoir (10) for storin at least one fluid, wherein the mounting component is a unitary body having an internal cavity adapted to receive the reservoir. Suitably the reservoir is removable from the component and provides a reserve for hydraulic oil, windscreen cleaning fluid, or pressurised air.

## Description

This invention relates to a mechanism for operating a linkage on an agricultural machine. More specifically, the invention relates to a mechanism for operating a front or rear linkage on an agricultural tractor.

Agricultural tractors are typically provided with a three point linkage or hitch at the rear of the tractor to which an implement can be attached. The linkage which comprises three links can be moved upwards and downwards. Usually hydraulic cylinders are used to lift and lower the links. Similar linkage arrangements at the front of tractors are also known.

The three point rear linkage comprises a central top link and two side lower links. Each of the lower links are connected to two respective rocker arms by lift rods. The rocker arms can be moved by hydraulic cylinders. When the rocker arms are moved, so the lift rods raise or lower the lower links. The front linkage typically comprises a mounting component pivotably mounted to the tractor and having linkage mounts by means of which an implement may be mounted to the tractor. The mounting component can be moved by hydraulic cylinders to raise or lower the implement.

A tractor requires various fluids in varying quantities to be carried on the tractor in fluid reserves. Hydraulic fluids, fuel, cleaning fluids and exhaust treatment fluids need to be carried. With the ever developing need for efficient tractors, space on a tractor is at a premium. Re-arranging components on a tractor to provide extra space for a further or larger component, such as a fluid reserve is a time consuming and costly task.

At the rear of a tractor, for example, an externally-mounted canister is used to collect hydraulic oil which leaks from the hydraulic couplings. The installation of a canister on a tractor has space (and hence cost) implications.

It is an object of the invention to overcome, or at least alleviate the problems associated with the storage of fluids on a tractor.

According to the invention there is provided an assembly of a mounting component for operating a linkage on an agricultural vehicle and a reservoir for storing at least one fluid, wherein the mounting component is a unitary (one-piece) body having an internal cavity adapted to receive the reservoir.

Preferably, the reservoir within the mounting component is an hydraulic oil reserve. More preferably, the reservoir is a leak oil reserve which collects oil leaking from the hydraulic couplings. The tractor does not therefore need an external canister to store the leak oil thus saving space.

The reservoir is suitably dimensioned as a snap-fit within the cavity and is extractable from the cavity through an opening in an external wall of the component for cleaning or replacement

A second reservoir may be provided for storing at least one other fluid and housed in the same cavity. Alternately, one or more further reservoirs may be provided housed in respective separate cavities.

The mounting component may comprise an operational part of a front linkage mechanism or a rocker for operating a rear linkage.

The invention will now be described, by way of example only with reference to the following drawings in which:
Figure 1 shows a perspective view of an assembly of a front linkage mounting component and a reservoir in accordance with the invention and mounted to an agricultural tractor;
Figure 2 shows the assembly of Figure 1 demounted from the tractor;
Figure 3 shows the demounted assembly of Figure 2 with the cavity reservoir partially extracted;
Figure 4 is a rear perspective view of the assembly of Figure 2; and
Figure 5 shows a cross sectional view along line A-A of Figure 4.

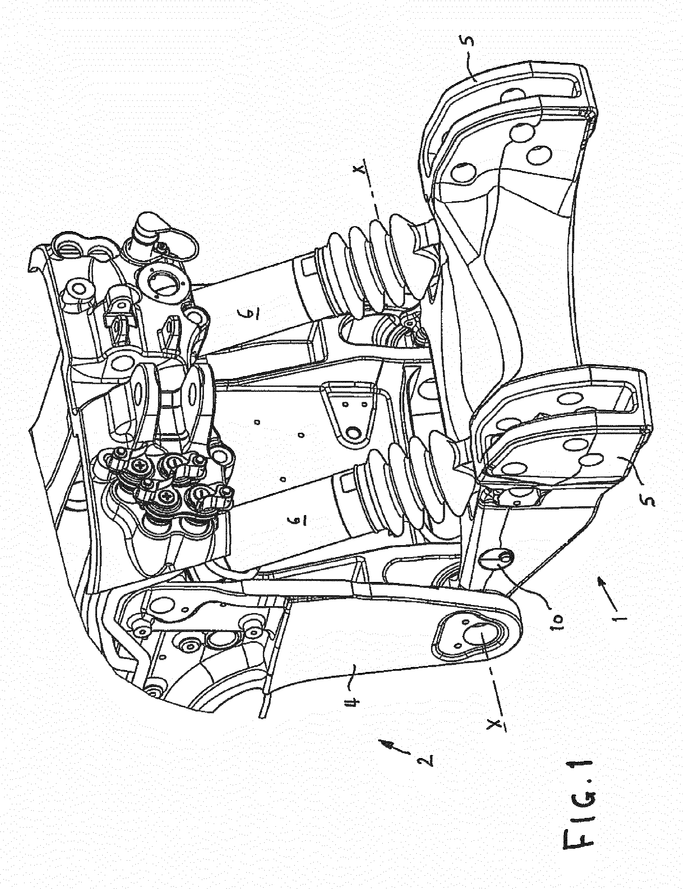

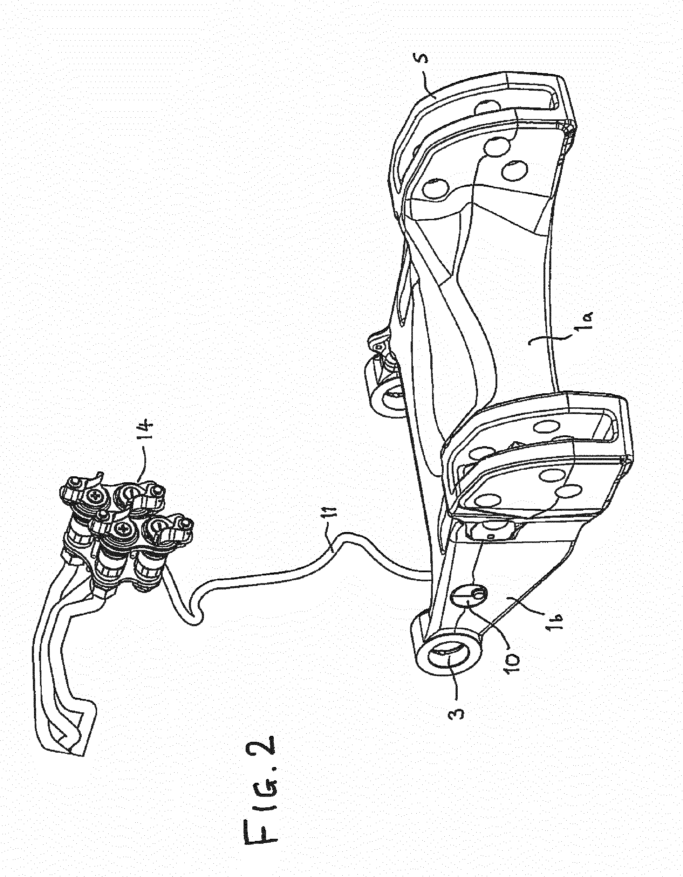

Figure 1 shows a front linkage mounting component 1 mounted on the front of a tractor, shown generally at 2. As can be seen more clearly in Figure 2, the mounting component is a generally H-shaped cast metal component having a transverse body portion 1a linking side arms 1b extending forward and behind the main body. At the rear end of each side arm is a through bore 3 to receive a pivot pin (not shown) which pin passes through corresponding bores in support arms 4 of the tractor frame to allow the mounting component 1 to pivot relative to the tractor 2 about axis X (Fig. 1). At the forward end of each side arm 1b there is a respective linkage mount 5 to which front linkage components enabling connection to an implement may be attached.

A pair of hydraulic cylinders 6 are each pivotably attached at one end to the tractor 2 and at the other to the mounting component 1. When the cylinders are operated, the mounting component (and any implement mounted thereto) may be raised and lowered.

The main body 1a of the component has a cavity 7 receiving a separate fluid reservoir 10. The fluid for example may be hydraulic oil, pressurised air, or a cleaning fluid such as a windscreen cleaning fluid. The main body 1a is provided with at least one inlet 8 and one outlet 9 through which a fluid can enter, or exit the reservoir 10.

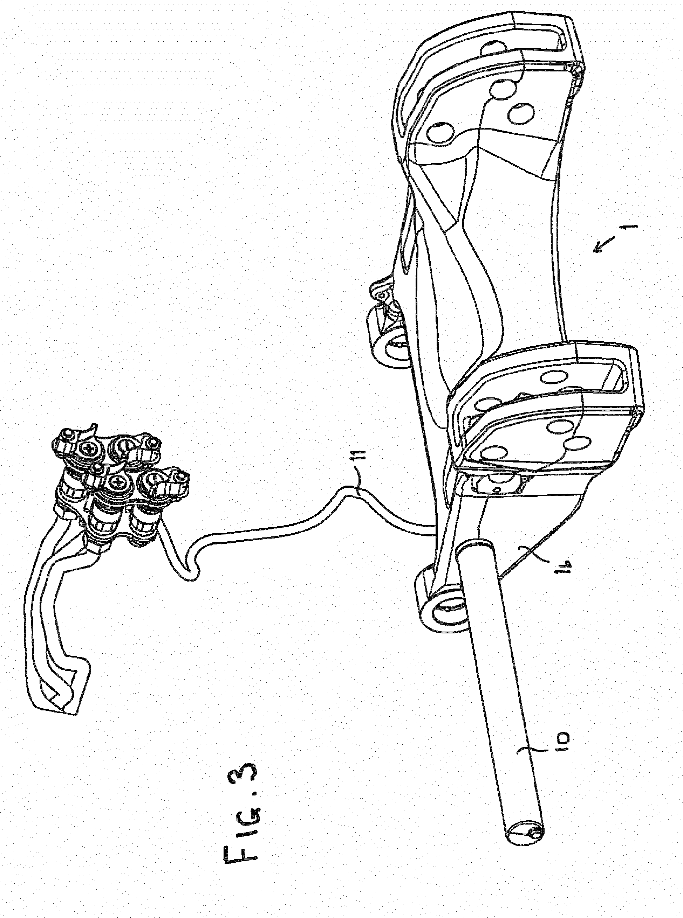

The reservoir 10 is suitably formed of a pressure moulded plastics material (although other materials may be used) and, as shown by Figure 3, can be simply extracted from the mounting component for maintenance or replacement. This is of particular benefit where it is desired to change the fluid received (for example from hydraulic oil to windscreen washer fluid) and it is necessary to avoid cross-contamination.

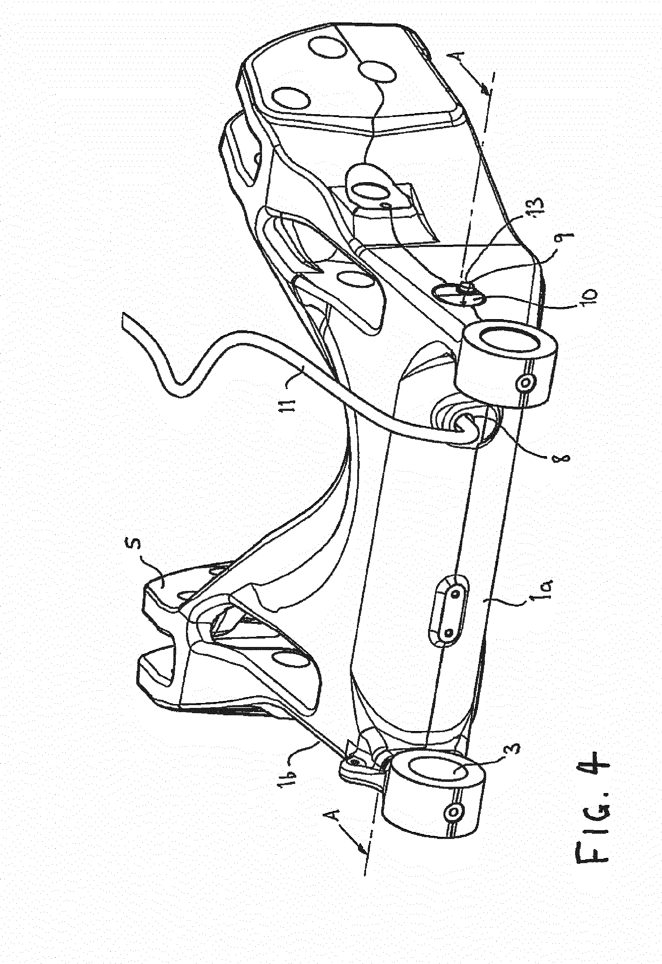

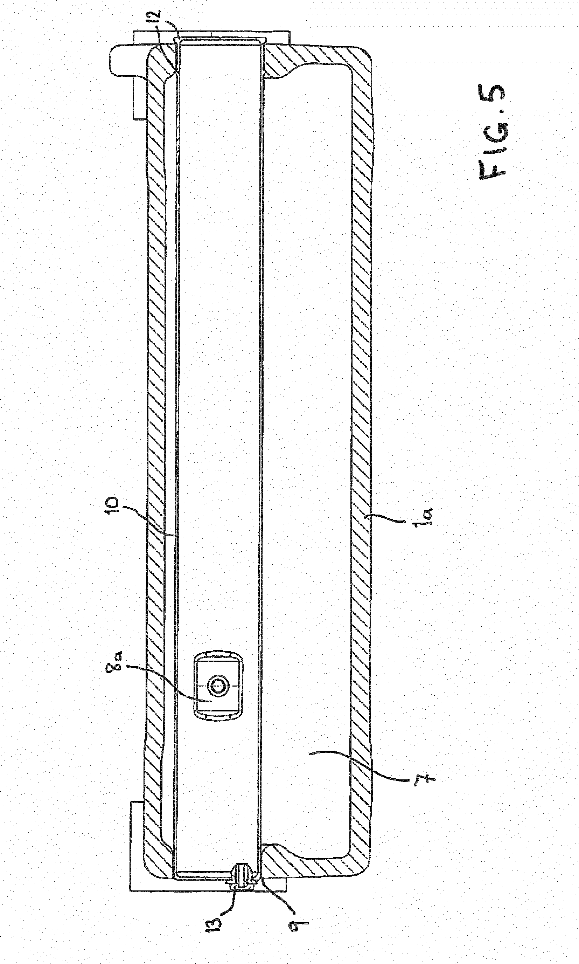

As seen in Figures 3, 4 and 5, the reservoir 10 is a generally cylindrical container extending the length of the transverse main body 1a to emerge with end faces coplanar with (or slightly proud of) the surfaces of the two side arms 1b. A part of the way along the axial length of the reservoir there is an inlet connection 8a which, when the reservoir is positioned within the cavity, aligns with the inlet opening 8 in the cast body of the mounting component to enable connection of an input line 11. As shown at the right-hand side of Figure 5, the outer surface of the reservoir may be provided with one or more ridges or projections 12 which cooperate with the cast body of the mounting component such that the reservoir is a snap-fit within the component. Alternative arrangements having recessed portions on the reservoir surface cooperating with projections from the cast body are also possible. As will be recognised, if it is desired that the reservoir hold pressurised fluids, the wall thicknesses of the reservoir will need to be greater than shown in Figure 5.

On one end face of the reservoir cylinder there is shown a discharge plug 13 by means of which the reservoir may be emptied without the reservoir needing to be removed from the mounting component. As will be readily understood, the discharge plug may be replaced by an outlet connection to a fluid conduit, or the arrangement of input and output may be reversed. Other variations in terms of the number and location of inputs and outputs to the reservoir, such as on the front or top, are also contemplated.

In Figure 2, a set of hydraulic couplings 14 are shown. These are mounted to the front of the tractor and provide a supply of hydraulic oil to a mounted implement. Typically, any leakage from these couplings would be transported away from the couplings in tubing to a separate canister mounted to the tractor. With the present invention, the leakage oil can be transported by an inflow line 11, for example of transparent flexible plastic tubing, through inlet 8 into the reservoir 10 housed within the mounting component 1. By the use of a transparent tube extending generally upwardly from the reservoir, it can be seen by external inspection when the reservoir is full and requires draining.

Although not shown in the drawings, the cavity 7 could be divided into two or more fluid compartments, each suitably containing a respective reservoir, for holding two or more fluids. Each reservoir would be provided with an associated inlet/outlet.

Although described above in terms of a front linkage mechanism, it will be understood that it is equally applicable to a rear-mounted linkage, with the reservoir being housed in a cavity within a rocker for operating the linkage.

## Claims

1. An assembly of a mounting component for operating a linkage on an agricultural vehicle and a reservoir for storing at least one fluid, wherein said mounting component is a unitary body having an internal cavity adapted to receive said reservoir.

2. An assembly as claimed in Claim 1, wherein said reservoir is extractable from said cavity through an opening in an external wall of said mounting component.

3. An assembly as claimed in Claim 1 or Claim 2, wherein the outer surface of said reservoir and inner surface of said cavity are shaped to provide a snap-fit location for said reservoir in said cavity.

4. An assembly as claimed in any of Claims 1 to 3, wherein said reservoir is a cylindrical container having at least one inlet and at least one outlet disposed on the surface thereof, and the mounting component is provided with at least one aperture coincident with an inlet or outlet of said reservoir when housed in said cavity.

5. An assembly as claimed in any preceeding Claim, wherein said reservoir is a reserve for at least one fluid being hydraulic oil, or windscreen cleaning fluid, or pressurised air.

6. An assembly as claimed in any preceding Claim, wherein said mounting component is formed of cast metal and said reservoir is formed of pressure moulded plastics material.

7. An assembly as claimed in any of Claims 1 to 4, further comprising a second reservoir for storing at least one other fluid and housed in said cavity.

8. An assembly as claimed in any preceeding Claim, wherein said mounting component is an operational part of a front linkage on an agricultural vehicle.

9. An assembly as claimed in any of Claims 1 to 7, wherein said mounting component is a rocker for operating a rear linkage on an agricultural vehicle
